# DEMANDE DE BREVET EUROPEEN

(11) **EP 4 836 292 A1**
(43) Date de publication de la demande: **04.11.2026**
(21) Numéro de dépôt: 26169690.0
(22) Date de dépôt: 31.03.2026
(51) Int. Cl.: H02S 20/30, F24S 25/50, F24S 30/20, F24S 30/425, H02S 20/23, F24S 30/00

(54) **INSTALLATION SOLAIRE COMPORTANT DES PANNEAUX SOLAIRES ET DES PANNEAUX NON OCCULTANTS SUSPENDUS**

(30) Priorité: 30.04.2025 FR 2504599
(71) Demandeur: POMA, 38340 Voreppe (FR)
(72) Inventeur: BABAZ, Mathieu, 38960 SAINT ÉTIENNE DE CROSSEY (FR)
(74) Mandataire: Alatis

(57) **Abrégé**

L'invention concerne une installation solaire (10) comprenant une structure de support comportant deux câbles porteurs (36) parallèles à une direction de référence (100), et une rangée de panneaux (14) disposés le long de la direction de référence (100), chacun des panneaux (20) étant suspendu par les deux câbles porteurs (36), la rangée de panneaux (14) comportant des panneaux dont certains au moins sont des panneaux (20) inclinables qui sont inclinables chacun au moins entre une position couvrante et une position ouverte par pivotement autour d'un axe de pivotement (102) perpendiculaire à la direction de référence (100), certains au moins des panneaux inclinables comportant chacun au moins un élément actif photovoltaïque et/ou héliothermique formant un sous-ensemble de panneaux actifs, la rangée de panneaux (14) formant une couverture continue lorsque les panneaux (20) inclinables sont dans la position couvrante, l'installation solaire (10) étant caractérisée en ce que certains au moins des panneaux (20) présentent au moins une portion inactive qui ne comporte pas d'élément actif.

## Description

### Domaine technique de l'invention

L'invention concerne, de façon générale, le domaine des installations solaires comportant des panneaux solaires, photovoltaïques ou héliothermiques, suspendus à une structure, en particulier des câbles.

Par ailleurs, l'invention a trait aux domaines des structures de couverture des sols pour la gestion de l'exposition solaire, des eaux pluviales ou de l'exposition au gel, par exemple pour l'agriculture ou en milieu urbain.

### État de la technique antérieure

Dans le document EP4362323 est divulguée une installation solaire comprenant un support présentant deux câbles porteurs et des panneaux photovoltaïques supportés par lesdits câbles, les panneaux formant une rangée de panneaux. Les panneaux photovoltaïques sont espacés les uns des autres par une distance prédéterminée et sont inclinables, donc mobiles, simultanément dans une même direction. Un désavantage d'une telle installation solaire est l'incapacité de gérer les panneaux distinctement en fonction de leur position attribuée le long de la rangée de panneaux, par exemple lorsque celle-ci suit deux lignes de pente distinctes. L'orientation des panneaux en direction du soleil n'est alors pas optimisée en fonction du positionnement de chaque panneau le long de la rangée.

De plus, d'autres désavantages découlent de cette installation solaire, par exemple l'incapacité de gérer les eaux pluviales dont l'écoulement n'est pas dirigé, ou de protéger du gel le sol partiellement couvert. Cette solution n'est alors pas adaptée au domaine agricole par exemple.

Pour pallier ce problème, il est proposé par exemple dans le document US2024243692 une installation solaire comprenant une rangée de panneaux photovoltaïques superposés comme des tuiles. Ainsi, la rangée de panneaux forme une couverture continue protégeant le sol et orientant l'écoulement des eaux pluviales. Ces panneaux sont néanmoins fixes. Il est en effet compliqué d'orienter des panneaux lorsqu'ils ne peuvent pas pivoter librement du fait qu'un ou plusieurs panneaux adjacents les limitent dans leurs mouvements de rotation.

Cette configuration engendre des risques de détérioration des panneaux selon les conditions météorologiques (grêle, fortes bourrasques), et n'est pas optimisée en termes de rendement de production d'énergie du fait de l'orientation fixe des panneaux et, éventuellement, de rendement des terres agricoles situées en dessous de ces rangées de panneaux, à cause d'un ombrage trop important diminuant le temps d'exposition au soleil des plantes qu'elles comportent.

### Exposé de l'invention

L'invention vise à remédier à tout ou partie des inconvénients de l'état de la technique et à proposer une installation solaire maximisant l'énergie collectée par chaque panneau solaire et protégeant le sol sous-jacent.

Pour ce faire est proposé, selon un premier aspect de l'invention, une installation solaire comprenant une structure porteuse parallèle à une direction de référence, et une rangée de panneaux disposés le long de la direction de référence, chacun des panneaux étant suspendu par la structure porteuse, la rangée de panneaux comportant au moins un premier sous-ensemble de panneaux inclinables qui sont inclinables chacun au moins entre une position couvrante et une position ouverte par pivotement autour d'un axe de pivotement perpendiculaire à la direction de référence et qui comportent chacun au moins un élément actif photovoltaïque et/ou héliothermique, l'installation solaire étant remarquable en ce que la rangée de panneaux comporte au moins un sous-ensemble de panneaux non occultants, comportant chacun au moins une portion intégralement transparente au moins dans un domaine de longueurs d'onde compris entre 350nm et 1200nm et qui, en position couvrante, permet à une lumière incidente de traverser lesdits panneaux non occultants, les panneaux non occultants étant positionnés de sorte que dans la position couvrante, les éléments actifs de deux panneaux inclinables successifs quelconques du premier sous-ensemble de panneaux inclinables sont disposés le long de la direction de référence de part et d'autre d'au moins une portion intégralement transparente d'un des panneaux non occultants.

Ainsi, la portion intégralement transparente des panneaux non occultant permet d'éloigner les uns des autres les éléments actifs appartenant à deux panneaux inclinables successifs, de sorte que quelle que soit l'inclinaison des panneaux inclinables, dans un domaine d'inclinaison opérationnelle, un élément actif donné de soit pas dans l'ombre d'un élément actif d'un panneau adjacent. Les panneaux non occultants contribuent par ailleurs à la couverture du sol en position couvrante, de sorte que la solution proposée combine un bon ensoleillement des éléments actifs avec une bonne couverture en position couvrante.

Selon un mode de réalisation, le sous-ensemble de panneaux non occultants et le premier sous-ensemble de panneaux inclinables sont disjoints. Les panneaux inclinables du premier sous-ensemble sont de préférence intégralement recouverts d'éléments actifs. De préférence les panneaux non occultants sont intégralement transparents.

Les panneaux non occultants peuvent être fixes. Alternativement, ils peuvent être inclinables chacun au moins entre une position couvrante et une position ouverte par pivotement autour d'un axe de pivotement perpendiculaire à la direction de référence.

Suivant un autre mode de réalisation, le premier sous-ensemble de panneaux inclinables est inclus dans le sous-ensemble de panneaux non occultants. En d'autres termes, chaque panneau inclinable du premier sous-ensemble comporte à la fois au moins un élément actif et une portion intégralement transparente.

Suivant un mode de réalisation particulièrement polyvalent, le sous-ensemble de panneaux non occultants comporte un deuxième sous-ensemble de panneaux inclinables qui sont inclinables chacun au moins entre une position couvrante et une position ouverte par pivotement autour d'un axe de pivotement perpendiculaire à la direction de référence, le premier et le deuxième sous-ensembles de panneaux inclinables étant disjoints. En particulier, les panneaux inclinables du premier sous-ensemble de panneaux inclinables sont reliés par un premier câble de commande de pivotement qui s'étend parallèlement à la direction de référence, et les panneaux inclinables du deuxième sous-ensemble de panneaux inclinables sont reliés à un deuxième câble de commande de pivotement qui s'étend parallèlement à la direction de référence. Le cas échéant le sous-ensemble de panneaux non occultant peut inclure les panneaux du premier sous-ensemble de panneaux inclinable et le deuxième sous-ensemble de panneaux inclinables. De préférence, deux panneaux inclinables successifs quelconques du premier sous-ensemble de panneaux inclinables sont séparés par un panneau inclinable du deuxième sous-ensemble de panneaux inclinables, et deux panneaux inclinables successifs quelconques du deuxième sous-ensemble de panneaux inclinables sont séparés par un panneau inclinable du premier sous-ensemble de panneaux inclinables. Le cas échéant, les panneaux inclinables du deuxième sous-ensemble de panneaux inclinables comportent chacun au moins un élément actif photovoltaïque et/ou héliothermique. Alternativement, il peut s'agir de panneaux intégralement transparents. Les panneaux inclinables du deuxième sous-ensemble sont manœuvrables de façon indépendante des panneaux inclinables du premier sous-ensemble, ce qui permet de faciliter certaines manœuvres, ou d'atteindre des configurations qui ne seraient pas permises sinon.

De préférence, dans la position couvrante, la rangée de panneaux forme une couverture continue. Par continu, on entend ici qu'il n'existe pas d'espacement notable entre deux panneaux adjacents de la rangée en position couvrante. Suivant une première variante, dans la position couvrante, les panneaux de la rangée de panneaux se chevauchent partiellement et forment un tuilage le long de la position de référence. Suivant une deuxième variante, dans la position couvrante, les panneaux inclinables se joignent par contact sans chevauchement le long de la direction de référence.

De façon avantageuse, la portion intégralement transparente des panneaux non occultants est opaque ou au moins partiellement opaque dans un domaine de longueur d'onde supérieures à 5µm. Un matériau utilisable est le plexiglass. L'intérêt d'un tel comportement est de combiner la transparence dans le domaine utile aux éléments actifs des panneaux solaire avec une opacité dans le domaine des infrarouges moyens, qui limite le rayonnement thermique des sols la nuit. On obtient ainsi en hiver en position couvrante un effet de serre qui préserve du gel les sols sous-jacents.

### Brève description des figures

D'autres caractéristiques et avantages de l'invention ressortiront à la lecture de la description qui suit, en référence aux figures annexées, qui illustrent :
- [Fig.1] : une vue schématique de côté d'une installation solaire comprenant une rangée de panneaux inclinables conformément à l'invention, selon un premier mode de réalisation.
- [Fig.2] : une vue isométrique schématique de la rangée de panneaux selon le premier mode de réalisation.
- [Fig.3A] : une vue schématique de trois panneaux inclinables successifs de la rangée de panneaux, dans une première position dite couvrante, selon le premier mode de réalisation.
- [Fig.3B] : une vue schématique de trois panneaux inclinables successifs de la rangée de panneaux, dans une deuxième position, selon le premier mode de réalisation.
- [Fig.3C] : une vue schématique de trois panneaux inclinables successifs de la rangée de panneaux, dans une troisième position, selon le premier mode de réalisation.
- [Fig.3D] : une vue schématique de trois panneaux inclinables successifs de la rangée de panneaux, dans une quatrième position, selon le premier mode de réalisation.
- [Fig.3E] : une vue schématique de trois panneaux inclinables successifs de la rangée de panneaux, dans une cinquième position, selon le premier mode de réalisation.
- [Fig.3F] : une vue schématique de trois panneaux inclinables successifs de la rangée de panneaux, dans une sixième position, dite couvrante, selon le premier mode de réalisation.
- [Fig.4A] : une vue schématique de trois panneaux inclinables successifs de la rangée de panneaux, dans une première position dite couvrante, selon un deuxième mode de réalisation.
- [Fig.4B] : une vue schématique de trois panneaux inclinables successifs de la rangée de panneaux, dans une deuxième position, selon le deuxième mode de réalisation.
- [Fig.4C] : une vue schématique de trois panneaux inclinables successifs de la rangée de panneaux, dans une troisième position, selon le deuxième mode de réalisation.
- [Fig.4D] : une vue schématique de trois panneaux inclinables successifs de la rangée de panneaux, dans une quatrième position, selon le deuxième mode de réalisation.
- [Fig.4E] : une vue schématique de trois panneaux inclinables successifs de la rangée de panneaux, dans une cinquième position, selon le deuxième mode de réalisation.
- [Fig.4F] : une vue schématique de trois panneaux inclinables successifs de la rangée de panneaux, dans une sixième position, selon le deuxième mode de réalisation.
- [Fig.5] : une vue schématique de trois panneaux inclinables successifs d'une rangée de panneaux, dans une première position dite couvrante, selon un troisième mode de réalisation.
- [Fig.6] : une vue schématique de côté d'une installation solaire comprenant une rangée de panneaux inclinables, selon un quatrième mode de réalisation.
- [Fig.7] : une vue schématique de côté d'une installation solaire comprenant une rangée de panneaux inclinables, selon un cinquième mode de réalisation.
- [Fig.8] : une vue schématique de trois panneaux inclinables successifs d'une rangée de panneaux d'une installation solaire selon un sixième mode de réalisation.
- [Fig.9] : une vue schématique de trois panneaux inclinables successifs d'une rangée de panneaux d'une installation solaire selon un septième mode de réalisation.

Pour plus de clarté, les éléments identiques ou similaires sont repérés par des signes de référence identiques sur l'ensemble des figures.

### Description détaillée d'un mode de réalisation

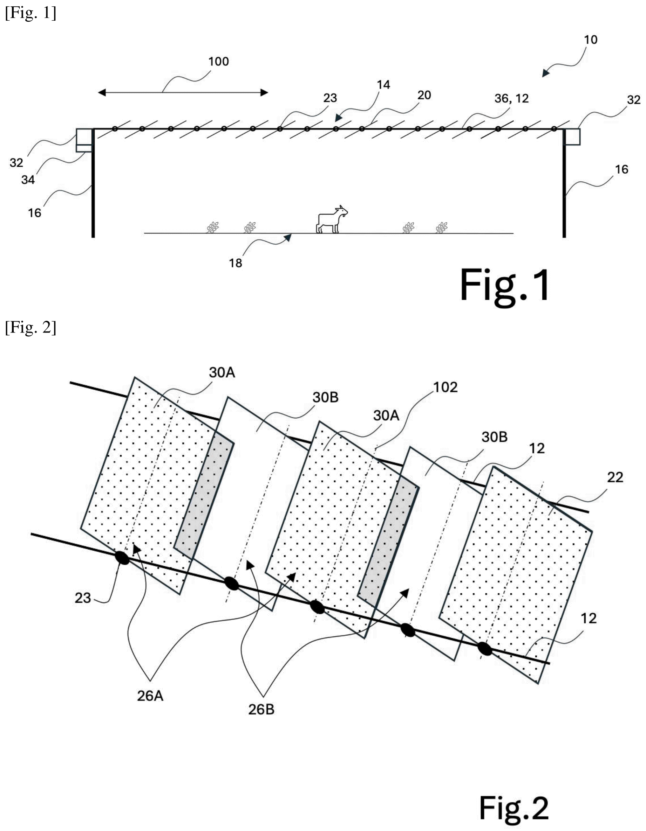

La [Fig.1] illustre une installation solaire **10** selon un premier mode de réalisation comprenant une structure porteuse **36** configurée pour supporter au moins une rangée de panneaux **14** et s'étendant dans une direction de référence **100** entre au moins deux pylônes **16** de la structure porteuse **36.** La rangée de panneaux **14** est ici disposée à distance au-dessus d'un terrain agricole **18** mais il est également envisagé de recouvrir des d'autres type de sols, par exemple des parcs de stationnement automobile.

Comme illustré en particulier sur la [Fig.2], la structure porteuse **36** comprend par exemple deux câbles porteurs **12.** Les deux câbles porteurs **12** s'étendent entre au moins les deux pylônes **16** et sont parallèles entre eux. Dans ce mode de réalisation, les câbles porteurs **12** sont globalement parallèles à une ligne de niveau, autrement dit les deux extrémités des deux câbles **12** présentent un différentiel d'altitude négligeable en fonction de la longueur des dits câbles porteurs **12.** Les câbles porteurs **12** sont parallèles à la direction de référence **100.** Les câbles porteurs **12** sont composés d'un ou plusieurs matériaux configurés pour résister à de fortes charges sur une grande durée tout en étant soumis aux conditions météorologiques extérieures. Ainsi, les câbles porteurs **12** présentent chacun une composition, une structure et une dimension de section prédéterminées pour résister aux conditions auxquelles les dits câbles **12** sont soumis.

La rangée de panneaux **14** comprend une pluralité de panneaux inclinables **20,** dont certains au moins, comme il sera décrit plus tard, sont des panneaux solaires, photovoltaïque ou héliothermiques. Chaque panneau inclinable **20** comprend un corps **22** globalement rectangulaire monté pivotant sur deux pivots **23** associés, fixés aux deux câbles porteurs **12** et alignés sur un axe de pivotement **102** associé qui est localement perpendiculaire aux deux câbles porteurs **12.** Le corps **22** s'étend longitudinalement entre les deux câbles porteurs **12.** Chaque corps **22** de panneau inclinable **20** comprend une face supérieure **24** opposée à une face inférieure du même panneau inclinable **20.** Chaque axe de pivotement **102** passe de préférence par le centre de masse du panneau inclinable **20** associé, et, dans l'hypothèse d'une répartition uniforme de la masse du corps **22** du panneau, scinde le corps **22** du panneau inclinable **20** en deux parties égales). Ainsi, l'énergie nécessaire pour faire pivoter chaque panneau inclinable **20** est minimale.

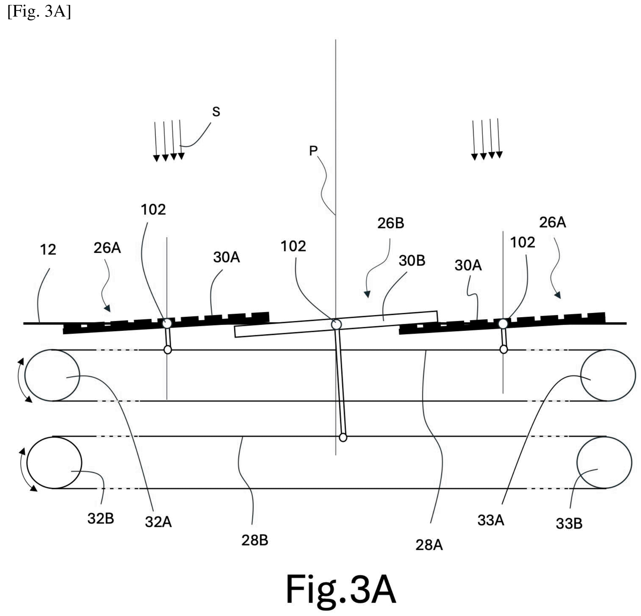

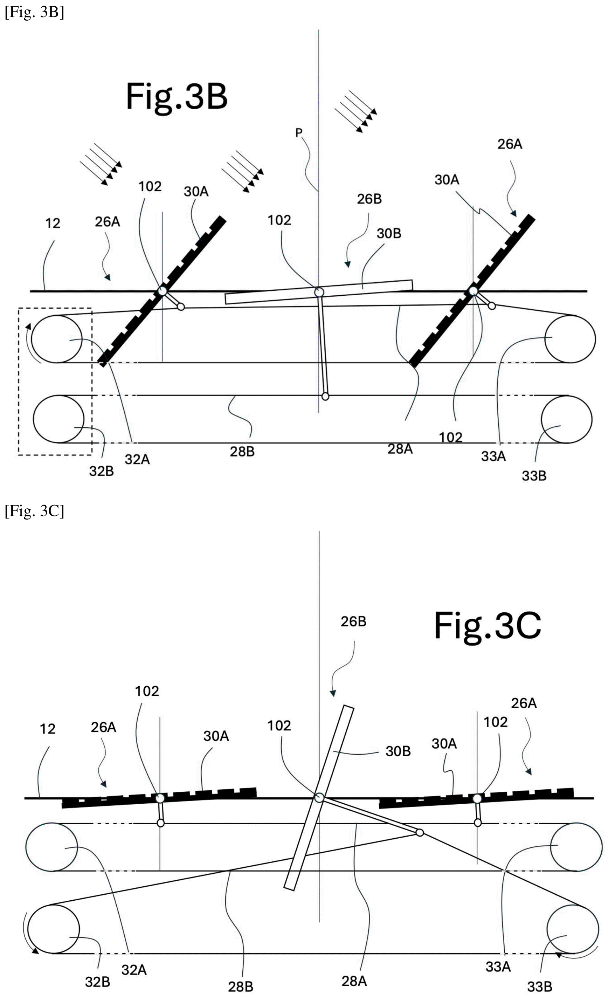

En référence aux figures 3A à 3E, Les panneaux inclinables **20** sont libres en rotation autour de l'axe de pivotement **102** dans un secteur angulaire prédéterminé supérieur à 45°, et de préférence supérieur à 60°C, par exemple de l'ordre de 90°, de part et d'autre d'une position de référence dans laquelle la face supérieure **24** est parallèle à l'axe de pivotement **102** et à la direction de référence **100.** Ainsi, chaque panneau inclinable **20** peut prendre au moins une position dite « couvrante » (en l'occurrence deux positions couvrantes, illustrées en [Fig.3A] et 3F, proche de la position de référence) et des positions « ouvertes » (par exemple illustrées en [Fig.3B] ou 3D).

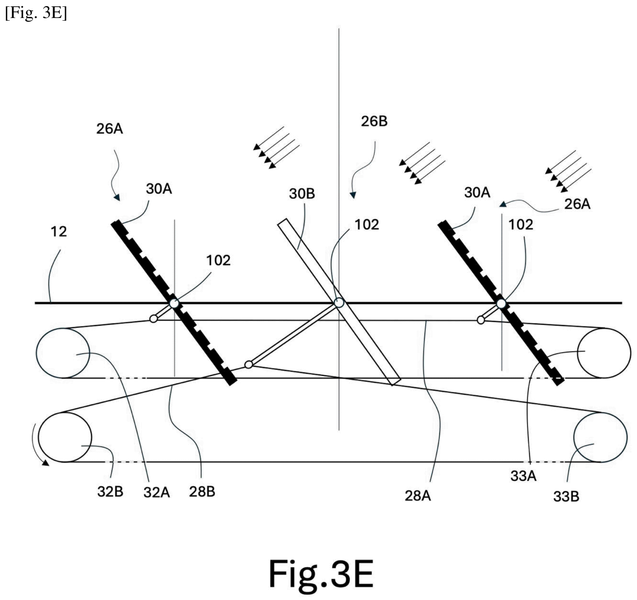

Dans ce mode de réalisation, deux axes de pivotement de panneaux inclinables **20** successifs sont espacés par une distance prédéterminée supérieure à la moitié de la largeur d'un panneau et inférieur à la largeur d'un panneau, cette largeur étant la dimension de la face supérieure **24** perpendiculaire à l'axe de pivotement **102.** Ainsi, dans les positions couvrantes illustrées sur les figures 3A et 3E, les deux panneaux inclinables adjacents **20** se chevauchent partiellement. La rangée de panneaux **14** recouvre alors de façon continue le sol sous-jacent.

Les panneaux inclinables **20** sont répartis en deux sous-ensembles **26A, 26B.**

Un premier sous-ensemble **26A** est constitué de panneaux inclinables **20** liés à un premier câble de commande **28A,** de sorte qu'une traction sur le premier câble de commande **28A** dans une direction donnée entraîne un pivotement des panneaux inclinables **20** du premier sous-ensemble **26A** autour de leur axe de pivotement **102** respectifs. Les panneaux inclinables **20** du premier sous-ensemble **26A** comportent chacun au moins un élément actif photovoltaïque et/ou héliothermique **30A** positionné au niveau la face supérieure **24** du corps **22.** En l'occurrence, dans ce mode de réalisation, le ou les éléments actifs **30A** couvrent l'ensemble de la face supérieure **24** du corps **22.**

Un deuxième sous-ensemble **26B,** disjoint du premier sous-ensemble **26A,** est constitué de panneaux inclinables **20** liés à un deuxième câble de commande **28B,** de sorte qu'une traction sur le deuxième câble de commande **28B** dans une direction donnée entraîne un pivotement des panneaux inclinables **20** du deuxième sous-ensemble **26A** autour de leur axe de pivotement **102** respectifs. Dans ce mode de réalisation, le corps **22** des panneaux inclinables **20** du deuxième sous-ensemble **26B** comporte au moins une portion transparente **30B** et ne comportent pas d'élément actif photovoltaïque et/ou héliothermique **30A.** En l'occurrence, les panneaux inclinables **20** du deuxième sous-ensemble **26B** sont entièrement transparents. Par transparence, on entend ici et dans l'ensemble de la demande une transparence qui s'étend dans le spectre utile pour les éléments actifs **30A,** par exemple entre 350nm et 1200nm. De préférence, la portion transparente **30B** n'est plus transparente dans le spectre de l'infrarouge moyen correspondant aux longueurs d'ondes d'émission du rayonnement des sols, notamment dans le domaine de longueurs d'ondes comprises entre 3µm et 60µm.

Dans ce mode de réalisation, le premier câble **28A** constitue une première boucle de câble tendue entre une première poulie motrice bidirectionnelle **32A** et une première poulie réceptrice **33A.** De façon similaire, le deuxième câble **28B** constitue une deuxième boucle de câble tendue entre une deuxième poulie motrice bidirectionnelle **32B** et une deuxième poulie réceptrice **33A.**

Les poulies motrices **32A** et **32B** appartiennent à un ensemble motorisé **32** piloté par un dispositif de commande **34.** Le dispositif de commande **34** comprend par exemple un microprocesseur ou un microcontrôleur. Le dispositif de commande **34** est configuré pour mettre en œuvre un procédé de pilotage des panneaux inclinables **20,** et donc commander les éléments motorisés **32** pour piloter les panneaux inclinables **20.** Le dispositif de commande **34** peut être relié à une horloge et à une mémoire pouvant contenir par exemple une abaque indiquant en fonction du jour dans l'année et de l'heure, la position du soleil ou, ce qui revient au même, l'inclinaison des panneaux leur assurant un ensoleillement maximal.

Le dispositif de commande **34** peut être également relié à divers capteurs. L'installation comprend, à titre d'exemple, un capteur de luminosité, un détecteur de précipitation, un anémomètre, un capteur de mouvement, un capteur de position, et/ ou un capteur de courant ou de tension électrique relié à un ou plusieurs panneaux photovoltaïques parmi les panneaux inclinables **20.** Ces éléments de mesures sont configurés pour relever des informations consistant à caractériser une situation environnementale à un moment précis. Les informations sont relevées périodiquement, par exemple toutes les 15 minutes. Le dispositif de commande **34** peut alors piloter les panneaux inclinables **20** après détermination de la une situation environnementale, en fonction des informations relevées par les éléments de mesures.

Dans ce mode de réalisation, les panneaux inclinables **20** des deux sous-ensembles **26A, 26B** sont disposés en alternance le long des deux câbles porteurs **12** pour former la rangée de panneaux **14.** Autrement dit, deux panneaux inclinables **20** actifs successifs du premier sous-ensemble **26A** sont séparés par un panneau inclinable **20** transparents du deuxième sous-ensemble **26B** et deux panneaux inclinables **20** transparents successifs du deuxième sous-ensemble **26A** sont séparés par un panneau inclinable **20** actif du premier sous-ensemble **26B.**

Exprimé d'une autre manière, les panneaux **20** de la rangée de panneaux **14** sont tous inclinables, et sont subdivisés en deux sous-ensemble disjoints, à savoir le premier sous-ensemble **26A** dont les panneaux comportent, de préférence sur l'entièreté de leur surface supérieure, des éléments actifs **30A,** et le deuxième sous-ensemble **26B,** qui constitue également un sous-ensemble de panneaux non occultants, qui ne comportent pas d'éléments actifs, mais sont entièrement transparents, les panneaux du sous-ensemble de panneaux non occultants s'intercalant entre les panneaux portant des éléments actifs **30A.**

Le fonctionnement de l'installation est illustré sur les figures 3A à 3E. Sur la [Fig.3A], les panneaux inclinables **20** sont en position couvrante, par exemple pour protéger le sol sous-jacent d'une précipitation, ou pour limiter de refroidissement radiatif du sol. Dans cette position couvrante, la couverture offerte par les panneaux inclinables **20** est continue et les panneaux sont partiellement superposés. Cette position sera également adoptée pour une orientation optimale des éléments actifs **30A,** lorsque la direction des rayons du soleil **S** est perpendiculaire à la surface supérieure **24** des panneaux **20** en position couvrante.

Pour suivre le soleil les panneaux **20** du premier sous-ensemble **26A** peuvent être basculés à partir de la position de la [Fig.3A] dans la position illustrée sur la [Fig.3B] en entraînant la poulie motrice **32A,** sans qu'il soit nécessaire d'entraîner le deuxième sous-ensemble **26B.**

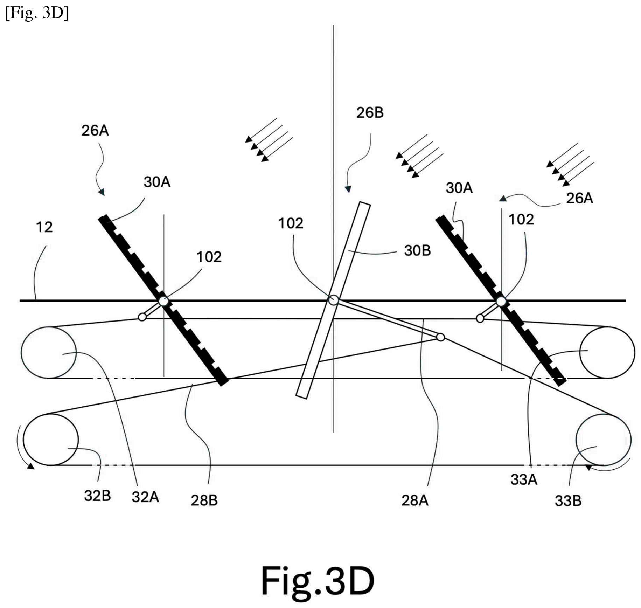

Si en revanche on souhaite, à partir de la position de la [Fig.3A], basculer les panneaux **20** du premier sous-ensemble **26A** dans la position de la [Fig.3D], il est nécessaire de passer par une étape intermédiaire illustrée sur la [Fig.3C], dans laquelle les panneaux **20** du deuxième sous-ensemble **26B** sont basculés, en actionnant la poulie motrice **32B,** dans une position effacée qui permet le passage des panneaux **20** du premier sous-ensemble.

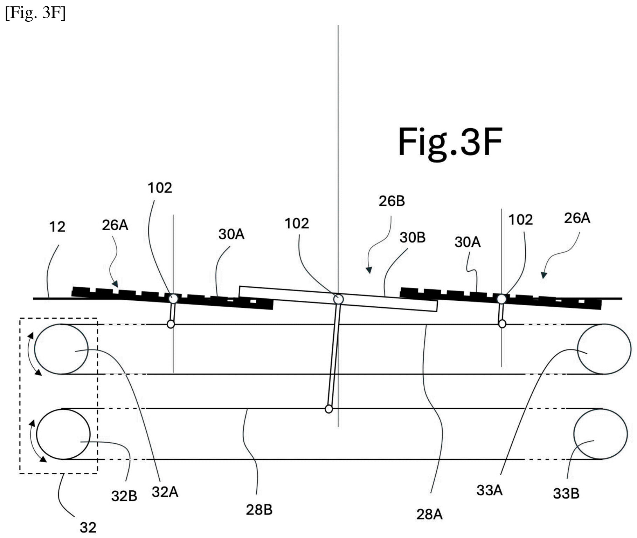

Le cas échéant, une deuxième position couvrante peut être obtenue, illustrée en [Fig.3F], qui nécessite, à partir de la position de la [Fig.3D], de faire basculer au préalable des panneaux **20** du deuxième sous-ensemble **26B** dans la position de la [Fig.3E] en actionnant la poulie motrice **32B,** puis d'actionner simultanément les poulies **32A** et **32B** pour atteindre la position couvrante de la [Fig.3F].

Les panneaux inclinables **20** transparents du deuxième sous-ensemble **26B** interposés entre les éléments actifs **30A** portés pas les panneaux inclinables **20** du premier sous-ensemble permettent, dans les positions inclinées des figures 3B, 3D et 3E, d'exposer l'intégralité des éléments actifs **30A** aux rayons incidents du soleil, sans créer de zone d'ombre. Il en va de même dans les positions couvrantes des figures 3A et 3F, où le recouvrement d'une partie des éléments actifs par les panneaux transparents n'est pas pénalisant. Ainsi, l'installation combine une utilisation optimale des éléments actifs **30A,** orientables vers les rayons incidents et ne subissant pas de zones d'ombres, avec une capacité couvrante sans discontinuité dans les positions couvrantes des figures 3A et 3F. La rangée de panneaux inclinables **14** selon le premier mode de réalisation permet donc, par la mobilité panneaux inclinables **20** :
- Une orientation optimale sans ombre des panneaux inclinables, de façon à ce que les éléments actifs **30A** soient perpendiculaire aux rayons solaires incidents afin d'optimiser le rendement photovoltaïque ou héliothermique dans des phases de production
- Des positions couvrantes pour protéger le sol sous-jacent en cas de précipitation ou la nuit ;
- Des positions de protection de l'installation en cas de fort vent, dans lesquelles les panneaux sont positionnés de façon à minimiser leur prise au vent.

Par ailleurs, la présence de portions transparentes **30B** interposées entre les éléments actifs **30A,** permet d'éviter les zones d'ombre lorsque les éléments actifs **30A** sont inclinés, ce qui optimise, pour une surface d'élément actifs **30A** donnée, la récupération de l'énergie solaire.

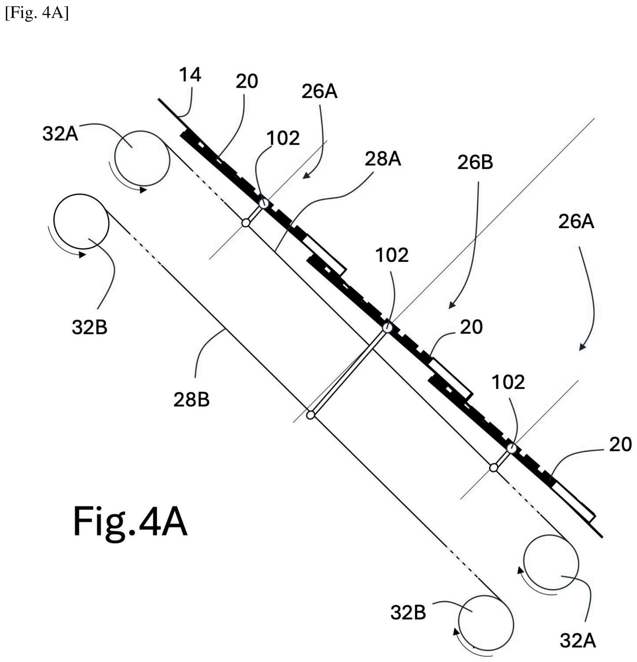

Un deuxième mode de réalisation, illustré sur les figures 4A à 4D, se distingue du premier mode de réalisation par les différences suivantes :
- La direction de référence **100** définie par la structure porteuse **36** est inclinée, par exemple parce que l'installation est positionnée sur un sol en pente. Cette inclinaison est très prononcée sur les figures 4A à 4D, et pourra le cas échéant être moins importante.
- Les panneaux inclinables **20** du premier sous-ensemble **26A** comportent à la fois au moins un élément actif photovoltaïque ou héliothermique **30A** et au moins une portion transparente **30B.** Dans la position de référence où le panneau inclinable est parallèle à la direction de référence **100,** ou dans la position couvrante de la [Fig.4A] qui en est proche, l'élément actif **30A** occupe la partie haute du panneau inclinable **20** et la portion transparente **30B** occupe la partie basse du panneau inclinable **20.**
- Les panneaux **20** du deuxième sous-ensemble **26B** comportent à la fois au moins un élément actif photovoltaïque ou héliothermique **30A** et au moins une portion transparente **30B.** Dans la position de référence où le panneau inclinable est parallèle à la direction de référence **100,** ou dans la position couvrante de la [Fig.4A] qui en est proche, l'élément actif **30A** occupe la partie haute du panneau inclinable **20** et la portion transparente **30B** occupe la partie basse du panneau inclinable **20.**
- le premier câble **28A** constitue un câble dont les extrémités sont enroulées sur deux tambours moteurs **32A** antagonistes, chacun apte à tirer le premier câble **28A** dans un sens ;
- le deuxième câble **28B** constitue un câble dont les extrémités sont enroulées sur deux tambours moteurs **32B** antagonistes, chacun apte à tirer le deuxième câble **28B** dans un sens.

Dans ce mode de réalisation, tous les panneaux **20** de la rangée de panneaux **14** peuvent être dit non occultants, puisqu'ils comportent tous une portion intégralement transparente **30B.** L'ensemble des panneaux non occultants est ainsi subdivisé en deux sous-ensembles, à savoir le premier sous-ensemble **26A** et le deuxième sous-ensemble **26B,** chacun pilotable en inclinaison de façon indépendante.

L'installation selon ce deuxième mode de réalisation fonctionne de la façon suivante.

Dans la position couvrante de la [Fig.4A], les panneaux inclinables des deux sous-ensembles **26A** et **26B** forment un tuilage sans discontinuité, avec un recouvrement de la partie haute des éléments actifs **30A** par la portion transparente **30B** d'un panneau inclinable adjacent. Dans cette position, les précipitations s'écoulent naturellement par gravité d'un panneau inclinable à l'autre. La partie recouverte des éléments actifs **30A** n'en assure pas moins sa fonction de captation de l'énergie solaire, du fait de la transparence des portions transparentes **30B.**

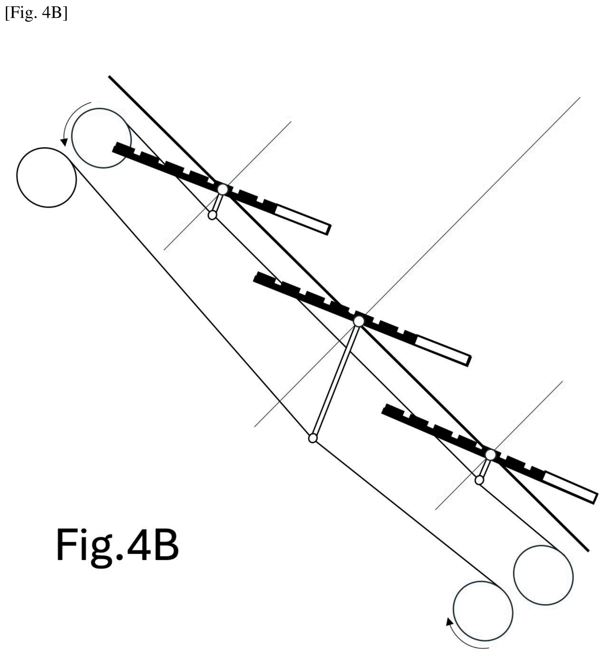

Le passage de la position couvrante de la [Fig.4A] à une position moins inclinée des panneaux **20** s'effectue en actionnant les tambours moteurs **32A** et **32B** comme illustré sur la [Fig.4B].

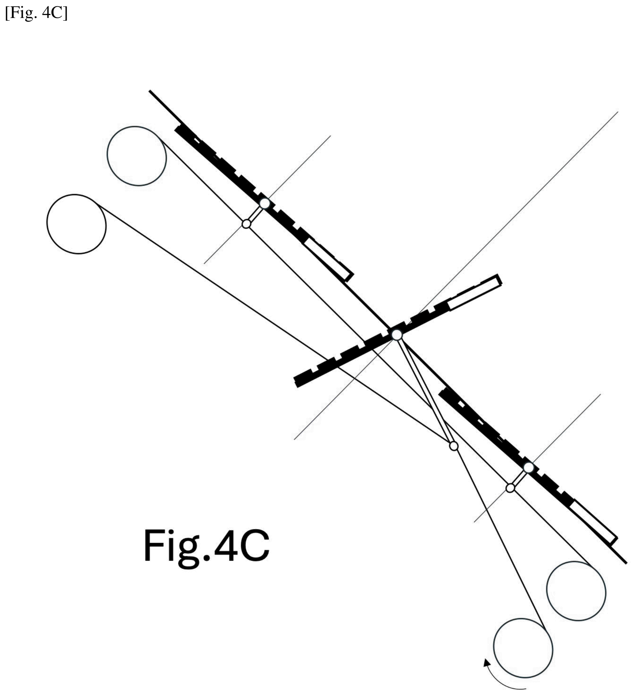

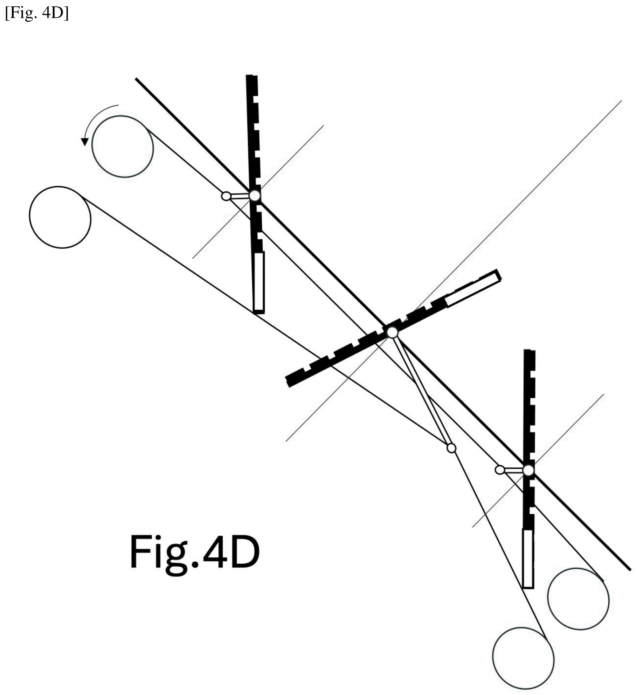

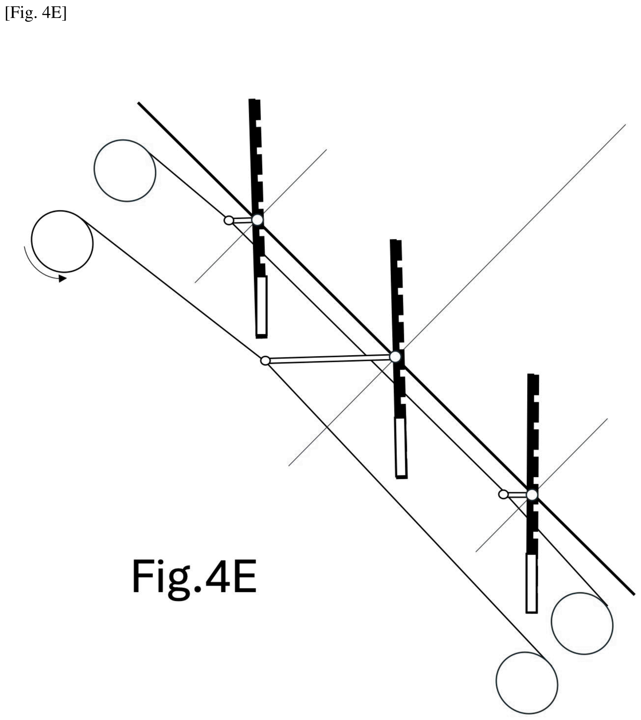

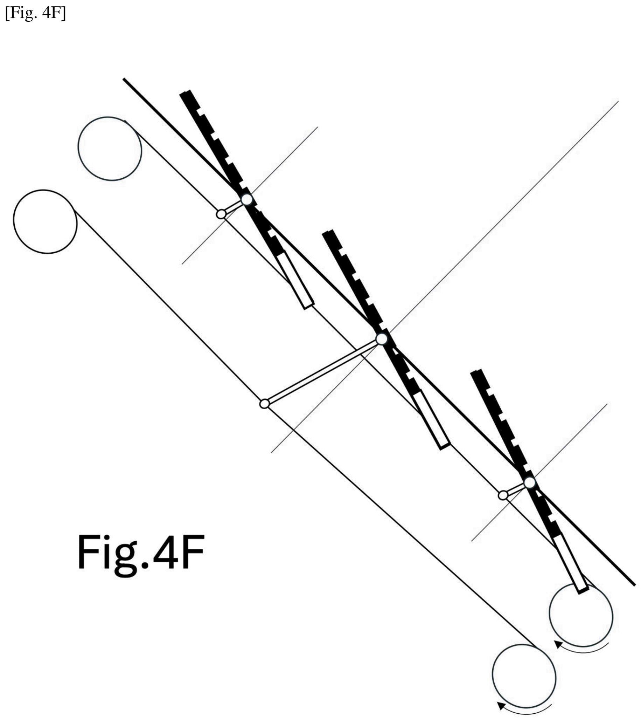

Le passage de la position couvrante de la [Fig.4A] à la position plus inclinée de la [Fig.4F] nécessite deux étapes intermédiaires transitoires illustrées sur les figures 4C, 4D et 4E, à savoir une séquence dans laquelle dans un premier temps ([Fig.4C]) les panneaux inclinables **20** du deuxième sous-ensemble **26B** sont positionnés de manière à s'effacer et à laisser dans un deuxième temps ([Fig.4D]) le passage pour les panneaux inclinables **20** du premier sous-ensemble **26A** jusqu'à ce que ceux-ci se positionnent dans une position transitoire qui permet le retournement des panneaux inclinables du deuxième sous-ensemble **26B** jusqu'à la position de la [Fig.4E], avant que finalement tous les panneaux puissent être amenés dans la position finale souhaitée de la [Fig.4F]. Dans la position de la [Fig.4F] la partie haute des éléments actifs **30A** projette une ombre sur le panneau inclinable **20** immédiatement supérieur dans la rangée de panneaux **14,** mais uniquement dans la portion transparente **30B,** de sorte que les éléments actifs **30A** reçoivent pleinement le soleil.

L'inclinaison des panneaux inclinables **20** peut être commandée en fonction de la déclinaison du soleil, au cours de l'année et/ou au cours de la journée. L'inclinaison des panneaux inclinables dans la position couvrante de la [Fig.4A] est par exemple choisie pour obtenir le meilleur rendement le jour de l'équinoxe. L'inclinaison dans la position de la figures 4B est par exemple choisie chaque jour du printemps ou de l'été pour obtenir le meilleur rendement du jour et l'inclinaison dans la position de la [Fig.4F] est par exemple choisie chaque jour de l'automne ou de l'hiver pour obtenir le meilleur rendement du jour.

Le premier et le deuxième modes de réalisation ont en commun que les panneaux inclinables **20** du deuxième sous-ensemble **26B** sont intercalés entre les panneaux inclinables **20** du premier sous-ensemble **26A,** ce qui permet entre autres aux panneaux inclinables **20** de la rangée **14** de se chevaucher deux à deux en position couvrante tout en permettant aux panneaux inclinables **20** d'être inclinés dans les deux sens par rapport à la position couvrante.

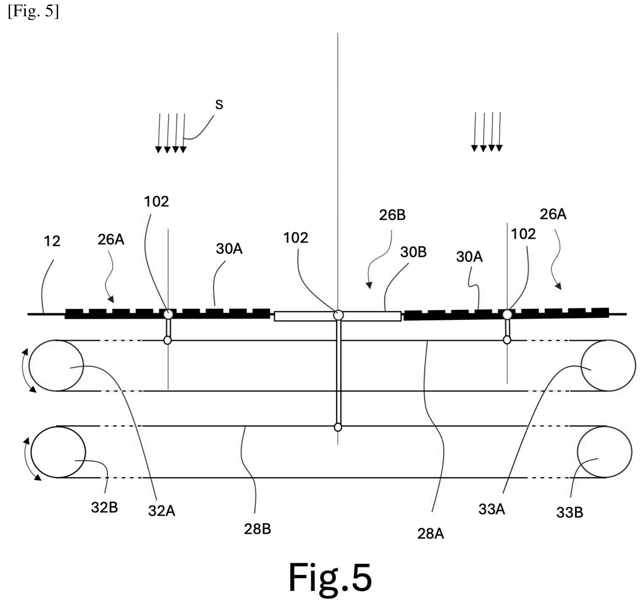

Le même avantage est obtenu lorsque, en variante des premiers et deuxième modes de réalisation, les panneaux inclinables **20** des deux sous-ensembles **26A, 26B** sont disposés bout à bout en position couvrante, sans se chevaucher, selon un troisième mode de réalisation illustré par exemple sur la [Fig.5] en position couvrante. Dans cette configuration, les mêmes séquences d'activation que pour les précédents modes de réalisation sont mises en œuvre pour éviter tout contact lors du passage d'un côté à l'autre d'une position couvrante.

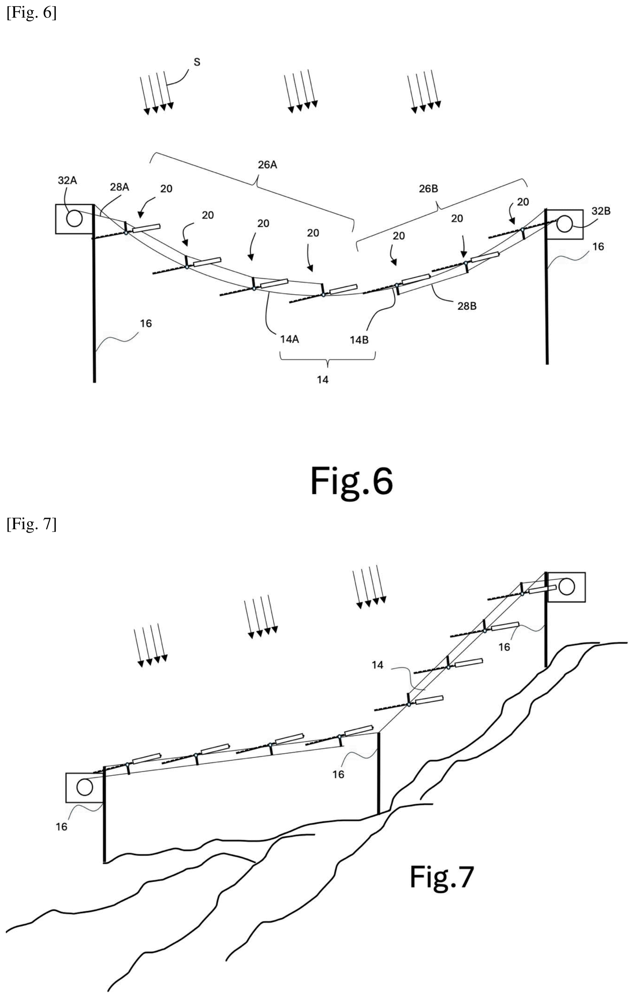

L'installation selon le quatrième mode de réalisation de la [Fig.6] diffère des précédentes en ce que les panneaux inclinables **20A** du premier sous-ensemble **26A** sont disposés côte-à-côte le long d'une première partie **14A** d'un câble porteur en chaînette, alors que les panneaux inclinables **20** du deuxième sous-ensemble **26B** sont disposés côte-à-côte le long d'une deuxième partie **14B** du câble porteur en chaînette, les parties du câble porteur **12** ayant des pentes différentes, ici en sens contraire, qui justifient de commander l'inclinaison de chaque sous-ensemble **26A, 26B** de façon indépendante, pour orienter l'ensemble des panneaux inclinables **20** de façon appropriée en fonction des rayons incidents du soleil. Comme dans le deuxième mode de réalisation des figures 4A à 4F, on peut prévoir que chacun des panneaux inclinables **20** comporte un élément actif **32A** et une portion transparente **32B,** de façon à ce que les panneaux inclinables ne projettent pas sur les éléments actifs **32A** des panneaux inclinables **20** suivants de la rangée une ombre qui viendrait diminuer le rendement de l'installation.

Un autre exemple d'une telle disposition est proposé avec le cinquième mode de réalisation illustré sur la [Fig.7], qui diffère du précédent essentiellement par le fait que l'installation équipe un terrain avec une pente variable, qui est à l'origine de la différence de pente entre la première partie **14A** du câble porteur et la deuxième partie **14B** du câble porteur. Les installations des figures 6 et 7 ont en commun de ne pas être nécessairement couvrante, au sens où une distance suffisante est prévue entre les panneaux pour qu'ils ne s'entrechoquent pas. Le cas échéant, on peut toutefois prévoir en variante une version couvrante, pour autant que des précautions soient prise pour limiter le débattement angulaire de chaque sous-ensemble **26A, 26B** d'un seul côté de la position couvrante.

D'une manière plus générale, ce mode de réalisation illustre que l'invention peut présenter autant de câbles de commande qu'il y a de portions de rangée de panneaux inclinables **14** suivant des lignes de pentes différentes, et autant de sous-ensembles distincts de panneaux **20** que de câbles de commande.

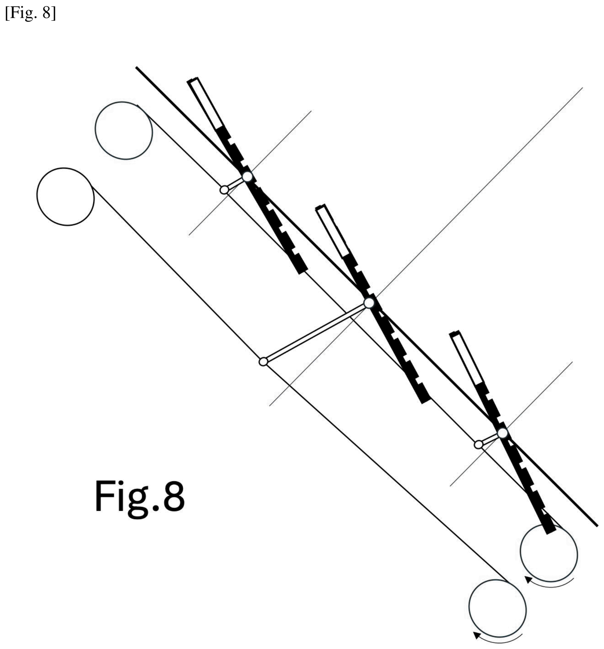

Un sixième mode de réalisation, illustré sur la [Fig.8], diffère du deuxième mode de réalisation en ce que les portions transparentes **30B** sont disposées dans la partie haute des panneaux inclinables **20.**

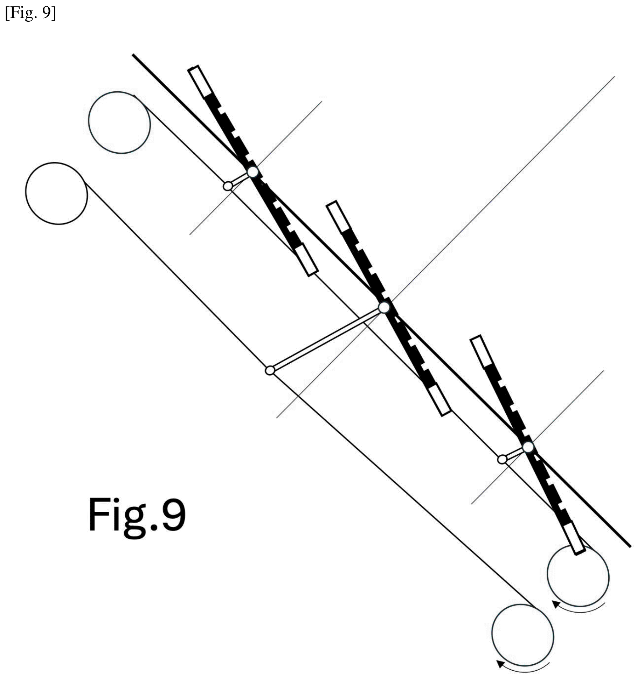

Un septième mode de réalisation, illustré sur la [Fig.9], diffère du deuxième mode de réalisation en ce que les panneaux inclinables **20** du premier et du deuxième sous-ensemble **26B** comprennent chacun un élément actif **30A** encadré par deux portions transparentes **30B.**

Un huitième mode de réalisation, non illustré, diffère des précédents modes de réalisation en ce que les pivots **23** définissent un axe de pivotement **102** qui est décalé par rapport centre de gravité des panneaux **20** et par rapport au barycentre géométrique des panneaux **20.** L'axe de pivotement **102** peut par exemple coïncider avec une arête du panneau qui s'étend d'un des câbles porteurs **12** à l'autre, ou au moins être plus proche d'une telle arête que du centre de gravité du panneau **20.** Ceci peut être vrai pour tous les panneaux inclinables **20,** ou pour certains d'entre eux seulement, par exemple les panneaux inclinables **20** du premier sous-ensemble **26A** ou ceux du deuxième sous-ensemble **26B.**

Un neuvième mode de réalisation, non illustré, diffère des précédents modes de réalisation en ce que tous les panneaux inclinables **20** ou certains d'entre deux seulement, par exemple les panneaux inclinables **20** du premier sous-ensemble **26A** ou ceux du deuxième sous-ensemble **26B** présentent, le long d'une arête transversale, un élément de récupération d'eau, par exemple une gouttière.

Un neuvième mode de réalisation, non illustré, diffère des précédents modes de réalisation en ce que les panneaux **20** du sous-ensemble de panneaux non occultants 20' sont fixes. Il n'est alors plus utile que l'installation **10** présente deux câbles de commande **28,** un seul câble commande suffisant à former un seul sous-ensemble mobile.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

La suspension des panneaux inclinables **20** peut être réalisée non pas par des câbles porteurs mais directement par des pylônes disposés sous les panneaux inclinables **20.**

## Revendications

1. Installation solaire (10) comprenant une structure porteuse (36) parallèle à une direction de référence (100), et une rangée de panneaux (14) disposés le long de la direction de référence (100), chacun des panneaux (20) étant suspendu par la structure porteuse (36), la rangée de panneaux (14) comportant au moins un premier sous-ensemble (26A) de panneaux inclinables (20) qui sont inclinables chacun au moins entre une position couvrante et une position ouverte par pivotement autour d'un axe de pivotement (102) perpendiculaire à la direction de référence (100) et qui comportent chacun au moins un élément actif (30A) photovoltaïque et/ou héliothermique, l'installation solaire (10) étant **caractérisée en ce que** la rangée de panneaux (14) comporte au moins un sous-ensemble de panneaux non occultants, comportant chacun au moins une portion intégralement transparente (30B) au moins dans un domaine de longueurs d'onde compris entre 350nm et 1200nm et qui, en position couvrante, permet à une lumière incidente de traverser lesdits panneaux non occultants, les panneaux non occultants étant positionnés de sorte que dans la position couvrante, les éléments actifs (30A) de deux panneaux inclinables (20) successifs quelconques du premier sous-ensemble (26A) de panneaux inclinables (20) sont disposés le long de la direction de référence (100) de part et d'autre d'au moins une portion intégralement transparente (30B) d'un des panneaux non occultants.

2. Installation solaire (10) selon la revendication 1, **caractérisée en ce que** le sous-ensemble de panneaux non occultants et le premier sous-ensemble de panneaux inclinables sont disjoints.

3. Installation solaire (10) selon la revendication 2, **caractérisée en ce que** les panneaux non occultants sont intégralement transparents.

4. Installation solaire (10) selon la revendication 1, **caractérisé en ce que** le premier sous-ensemble de panneaux inclinables est inclus dans le sous-ensemble de panneaux non occultants.

5. Installation solaire (10) selon l'une quelconque des revendications 1 à 4, **caractérisée en ce que** le sous-ensemble de panneaux non occultants comporte un deuxième sous-ensemble (26B) de panneaux inclinables (20) qui sont inclinables chacun au moins entre une position couvrante et une position ouverte par pivotement autour d'un axe de pivotement (102) perpendiculaire à la direction de référence (100), le premier et le deuxième sous-ensembles (26A, 26B) de panneaux inclinables (20) étant disjoints.

6. Installation solaire (10) selon la revendication 5, **caractérisée en ce que** les panneaux inclinables (20) du premier sous-ensemble (26A) de panneaux inclinables (20) sont reliés par un premier câble de commande (28A) de pivotement qui s'étend parallèlement à la direction de référence (100), et les panneaux inclinables (20) du deuxième sous-ensemble (26B) de panneaux inclinables (20) sont reliés à un deuxième câble de commande (28B) de pivotement qui s'étend parallèlement à la direction de référence (100).

7. Installation solaire (10) selon l'une quelconque des revendications 5 à 6, **caractérisée en ce que** deux panneaux inclinables (20) successifs quelconques du premier sous-ensemble (26A) de panneaux inclinables (20) sont séparés par un panneau inclinable (20) du deuxième sous-ensemble (26B) de panneaux inclinables (20), et deux panneaux inclinables (20) successifs quelconques du deuxième sous-ensemble (26B) de panneaux inclinables sont séparés par un panneau inclinable (20) du premier sous-ensemble (26A) de panneaux inclinables (20).

8. Installation solaire (10) selon l'une quelconque des revendications 5 à 7, **caractérisée en ce que** les panneaux inclinables (20) du deuxième sous-ensemble (26B) de panneaux inclinables (20) comportent chacun au moins un élément actif photovoltaïque et/ou héliothermique.

9. Installation solaire (10) selon l'une quelconque des revendications précédentes, **caractérisée en ce que** dans la position couvrante, la rangée de panneaux (14) forme une couverture continue.

10. Installation solaire (10) selon la revendication 9, **caractérisée en ce que** dans la position couvrante, les panneaux (20) de la rangée de panneaux (14) se chevauchent partiellement et forment un tuilage le long de la position de référence.

11. Installation solaire (10) selon la revendication 9, **caractérisée en ce que** dans la position couvrante, les panneaux inclinables (20) se joignent par contact sans chevauchement le long de la direction de référence (100).

12. Installation solaire (10) selon l'une quelconque des revendications précédentes , **caractérisé en ce que** la portion intégralement transparente des panneaux non occultants est opaque ou au moins partiellement opaque dans un domaine de longueur d'onde supérieures à 5µm.
